# EUROPÄISCHE PATENTSCHRIFT

(11) **EP 1 510 286 B1**
(45) Veröffentlichungstag und Bekanntmachung des Hinweises auf die Patenterteilung: **30.08.2006**
(21) Anmeldenummer: 03019451.8
(22) Anmeldetag: 28.08.2003
(51) Int. Cl.: B23Q 17/20, B23Q 17/22, G05B 19/401

(54) **Verfahren und Vorrichtung zur Werkzeug- oder Werkstückumrüstung einer Bearbeitungsmaschine mit einer Abtasteinrichtung**
Method and device for changing a tool or workpiece in a machine tool with a tool or workpiece characteristics detecting means
Procédé et dispositif de changement de pièce ou d'outil dans une machine-outil avec des moyens de détection des caractéristiques de la pièce ou outil

(43) Veröffentlichungstag der Anmeldung: 02.03.2005
(73) Patentinhaber: Rolf Helle GmbH, 73098 Rechberghausen (DE)
(72) Erfinder: Helle, Rolf, 73098 Rechberghausen (DE)
(74) Vertreter: Jakelski, Joachim

(56) Entgegenhaltungen:
- EP-A- 0 899 058
- DE-A- 4 022 799
- DE-A- 19 711 500
- DE-A- 19 840 801
- US-A- 5 532 932

## Beschreibung

Die Erfindung betrifft generell Bearbeitungsmaschinen zur Abtragsbearbeitung von Werkstücken und insbesondere ein Verfahren und eine Vorrichtung zur positionsgenauen Umrüstung einer Werkzeugbearbeitungsmaschine mit unterschiedlichen Werkzeugen und Werkstücken gemäß den Oberbegriffen der jeweiligen unabhängigen Ansprüche.

Ein gattungsgemäßes Verfahren und leine Vorrichtung zur Werkzeug- und/oder Werkstückumrüstung bei hier betroffenen Bearbeitungsmaschinen zur materialabtragenden Bearbeitung und Behandlung von Werkstücken sind beispielsweise aus der DE 198 40 801-A vorbekannt.

Bei der Werkzeugumrüstung in einer solchen Bearbeitungsmaschine ist eine präzise Positionierung des Werkzeuges relativ zum Werkstück mit einer Genauigkeit bis in den µm-Bereich erforderlich, um eine Bearbeitung des Werkstückes mit der erforderlichen Präzision zu ermöglichen. Eine solche Bearbeitungsmaschine geht bspw. aus der DE 41 15 896-A hervor.

Es sind zudem Verfahren und Vorrichtungen bekannt, bei denen die Positionierung des jeweiligen Werkstückes vor der eigentlichen Werkzeugbearbeitung mittels geeigneter Bearbeitungsstationen oder Messanordnungen erfolgt. Dabei wird das Werkstück relativ zum Bearbeitungswerkzeug mittels mechanischer Positioniermittel wie bspw. die in der US-Patentschrift 4 562 391 beschriebene Führungsplatte mit Passbohrungen, die mit auf einer Spanplatte des Werkzeuges angeordneten Führüngszapfen zur Positionierung des Werkzeuges relativ zum Werkstück zusammenwirken, ausgerichtet. In dem dortigen Fall handelt es sich um eine Funkenerosionsmaschine und ein entsprechendes Erodierwerkzeug.

Des Weiteren gehen aus dem europäischen Patent EP 0 485 662-B ein Verfahren und eine Vorrichtung zum voreingestellten Umrüsten einer hier betroffenen Bearbeitungsmaschine hervor. Die dort beschriebene Lösung bezieht sich auf eine Situation, bei der bspw. in einer Drehmaschine von einem Werkzeug auf ein anderes Werkzeug umgerüstet werden muss oder bei der unterschiedliche Werkstücke zur Bearbeitung gelangen. Dabei treten Probleme derart auf, dass es zwar möglich ist, an einem Voreinstellplatz, getrennt zur Bearbeitungsmaschine, die Retativpositionen eines Werkzeugwechselhalters unter Verwendung optischer Einstellgefäte präzise zu bestimmen, dass aber andererseits diese gesamten Einstellungen dann verlorengehen, wenn man das Werkzeug samt Halterung von der Bearbeitungsmaschine entfernt, um etwa für ein anderes Werkzeug Platz zu machen. In diesem Fall geht die gesamte, vorher aufgewendete Umrüstzeit verloren, auch dann, wenn von einem Werkstück auf ein anderes mit unterschiedlichen Abmessungen und Bearbeitungsdaten umgerüstet werden muss.

Nachteilig an den vorbekannten Verfahren und Vorrichtungen ist auch, dass die genannten Positionierschritte bei jedem Umrüsten der Bearbeitungsmaschine mit einem neuen Werkzeug und/oder einem neuen Werkstück von einer Bedienperson aufs Neue durchzuführen sind. Ein Werkzeugwechsel bzw. eine Werkzeugumrüstung ist bei materialabtragenden Werkzeugen wie
bspw. Funkenerodierelektroden wegen der hohen Materialbeanspruchung während des Abtragvorganges relativ häufig erforderlich. Die Positioniergüte hängt zudem entscheidend von den Fähigkeiten und der Routine des jeweiligen Bedienpersonals ab.

Der vorliegenden Erfindung liegt deshalb die Aufgabe zugrunde, ein Verfahren und eine Vorrichtung der eingangs genannten Art anzugeben, welche eine präzise, zuverlässige und insbesondere von nur angelerntem Bedienpersonal ausführbare Umrüstung und Positionierung eines Werkzeuges und/oder eines Werkstücks in einer vorbeschriebenen Bearbeitungsmaschine oder einem bei einer solchen Bearbeitungsmaschine vorgesehenen Voreinstellplatz bzw. Messplatz ermöglichen.

Diese Aufgabe wird gelöst durch die Merkmale der unabhängigen Ansprüche. Vorteilhafte Ausgestaltungen und Weiterbildungen sind Gegenstand der jeweiligen Unteransprüche.

Die Besonderheit der Erfindung liegt darin, dass bereits zur Zeit einer rechnergestützten Herstellung des Werkzeuges in einer Werkzeugmaschine zunächst aus den dabei zugrundeliegenden Designdaten die in einer vorgebbaren Blickrichtung sich ergebenden Umrisse bzw. Konturen des Werkzeuges, insbesondere in Relation zu dem zu bearbeitenden Werkstück, ermittelt und zwischengespeichert werden. Bei einer Werkzeugbearbeitungsmaschine zur Bearbeitung eines schließlich zu bearbeitenden Werkstückes, oder einer mit dieser zusammenarbeitenden Positioniereinrichtung, ist eine im Wesentlichen in der genannten Blickrichtung wirkende Abtasteinrichtung zur Erfassung der tatsächlichen Position des Werkzeuges relativ zum Werkstück angeordnet, wobei es sich um eine berührungslose Abtasteinrichtung wie bspw. ein digital auslesbares optisches oder akustisches Aufnahmesystem oder ein Laserabtastsystem oder dgl. oder eine kontaktbestimmte Abtasteinrichtung wie bspw. eine Anordnung einer oder mehrerer mechanischer Messspitzen handeln kann.

Nachdem eine Bedienperson das Werkzeug zunächst nur grob justiert in eine angenäherte Bearbeitungsposition in der Werkzeugbearbeitungsmaschine gebracht hat, oder diese Positionierung mittels eines mechanischen Manipulators maschinengestützt durchgeführt wurde, werden das Werkzeug und das Werkstück in der genannten Blickrichtung von der Abtasteinrichtung abgetastet und die sich dabei ergebenden, für die dann vorliegende Positionierung charakteristischen Abtastdaten zwischengespeichert. Diese Abtastdaten werden dann durch die Bedienperson oder bevorzugt ebenfalls rechnergestützt mit den zuvor zwischengespeicherten Konturen bzw. Konturdaten verglichen und aus dem Ergebnis des Vergleichs Korrekturdaten für die Positionierung des Werkzeuges in Relation zum Werkstück ermittelt. Diese Korrekturdaten können dabei in Einheiten von kartesischen Koordinaten, Zylinderkoordinaten oder dgl. angegeben sein. Mittels der Korrekturdaten kann entweder eine entsprechende Korrektur der Steuerdaten für die Werkstückbearbeitung erfolgen oder die Positionen des Werkzeuges und/oder des Werkstückes selbst entsprechend korrigiert werden.

Es ist anzumerken, dass bei den hier betroffenen Bearbeitungsmaschinen die Werkzeuge und Werkstücke generell jeweils mittels einer einzigen Spanneinrichtung gehaltert werden. Diese Spanneinrichtung bildet demnach die Grundlage für die genannten relativen Positionen zwischen dem Werkzeug und dem Werkstück.

In einer weiteren Ausgestaltung des erfindungsgemäßen Verfahrens und der Vorrichtung ist vorgesehen, dass die Abtasteinrichtung Mittel zur Erfassung der Reflektivität, Farbe oder Graustufe aufweist. In Abhängigkeit von diesen erfassten Materialeigenschaften werden die Steuerdaten zur Ansteuerung des Werkzeuges entsprechend angepasst. So wird im Falle einer Funkenerosionsmaschine bevorzugt der zwischen dem Werkzeug und dem Werkstück eingestellte Erodierspalt und/oder die Vorschubgeschwindigkeit des Werkzeuges relativ zum Werkstück an das jeweilige Material von Werkzeug und Werkstück oder deren Materialkombination angepasst. Im Falle einer Fräsmaschine können die Vorschubgeschwindigkeit des Werkzeuges und/oder die Rotationsgeschwindigkeit des Werkstückes relativ zum Werkzeug an die jeweiligen Materialien angepasst werden. Durch diese Maßnahme ist gewährleistet, dass die für eine genannte Materialkombination jeweils optimalen Maschinenparameter automatisch eingestellt werden. Dadurch wird das jeweilige Bedienpersonal zusätzlich entlastet und Fehlbedienungen der Bearbeitungsmaschine aufgrund von fälschlich erkannten Werkzeug-/Werkstückmaterialien zuverlässig vermieden.

Das erfindungsgemäße Verfahren sowie die Vorrichtung stellen insgesamt einen erheblichen Automatisierungsgrad bei der Positionierung des Werkzeuges/Werkstückes dar und können sogar die Positioniervorgänge seitens der Bedienperson unterstützen oder ersetzen, wodurch eine fehlerhafte Positionierung wirksam vermieden und die Positionierung sogar noch wesentlich präziser und fehlerärmer (d.h. Bedienfehler vermeidend) als im Stand der Technik erfolgen kann. Zusätzlich ermöglicht die Erfindung eine autonom und zu anderen Bearbeitungsvorgängen parallel und demnach zeitlich gesehen höchst wirtschaftlich durchführbare Werkzeugumrüstung.

Die Erfindung wird nachfolgend, unter Bezugnahme auf die beigefügte Zeichnung, anhand eines bevorzugten Ausführungsbeispiels in größerem Detail beschrieben, aus dem sich weitere Merkmale und Vorteile der Erfindung ergeben.

Im Einzelnen zeigen
- Fig. 1: in schematischer Blockdarstellung eine Anordnung zweier Bearbeitungsmaschinen gemäß der Erfindung, und zwar am Beispiel einer Fräsmaschine zur Herstellung eines Werkzeuges und einer Funkenerosionsmaschine zur nachfolgenden Bearbeitung eines Werkstückes mit diesem Werkzeug; und
- Fig. 2: eine typische Vorgehensweise zur Werkzeugumrüstung gemäß der Erfindung anhand eines Flussdiagramms.

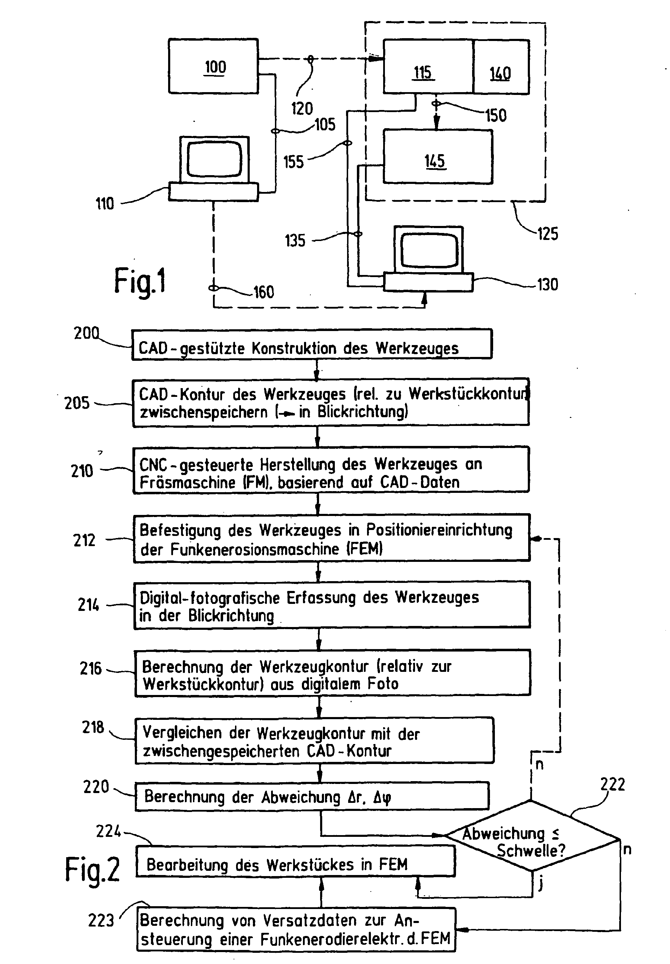

Die in der Fig. 1 gezeigte Anordnung umfasst eine vorliegend nur schematisch dargestellte Fräsmaschine (FM) 100, als Beispiel einer Werkzeugmaschine zur Herstellung eines Werkzeuges zur späteren Bearbeitung eines Werkstückes. Die Fräsmaschine 100 wird mittels eines über eine erste Leitung 105 mit dieser verbundenen ersten Digitalrechners 110 in an sich bekannter Weise CNC(Computer-Numeric-Control)-gesteuert betrieben. Weiter ist angenommen, dass die Konstruktion des Werkzeuges zur Herstellung des Werkstückes mittels eines an sich bekannten CAD(Computer-Aided-Design)-Systems erfolgt.

Nach Beendigung der Konstruktionsphase wird zunächst das Werkzeug mittels der genannten Fräsmaschine 100 hergestellt. Bereits in der Konstruktionsphase des Werkzeuges hat festgelegt zu werden, in welcher Position das Werkzeug, bspw. eine Funkenerodierelektrode einer in dem vorliegenden Ausführungsbeispiel umfassten Funkenerosionsmaschine (FEM) 125, an das Werkstück zum Zwecke der Werkzeugbearbeitung anzunähern ist. Diese Positionierung des Werkzeuges in Relation zum jeweiligen Werkstück, und zwar in einer vorgebbaren Blickrichtung auf das Werkzeug bzw. das Werkstück, wird mittels des Rechners 110 berechnet und als erste Positionsdaten zwischengespeichert.

Das in der Fräsmaschine hergestellte Werkzeug wird der bereits erwähnten Funkenerosionsmaschine 125 zugeführt 120. Durch die Strichelung 120 ist angedeutet, dass diese Überführung des Werkzeuges durch eine Bedienperson oder mittels eines Manipulators automatisch bewerkstelligt wird.

Die Methode der Funken- oder Elektroerosion, mittels der sehr präzise Konturen bspw. in metallischen Werkstücken erzeugbar sind, beruht bekanntermaßen auf der Materialabtragung aufgrund elektrischer Entladung zwischen zwei Elektroden über ein Dielektrikum. In entsprechenden Werkzeugmaschinen, den sogenannten "Funkenerosionsmaschinen", wird die eine Elektrode durch das Werkstück und die andere durch ein Werkzeug (Werkzeugelektrode) gebildet. Zur Herstellung der gewünschten Kontur wird für eine entsprechende, in der Regel numerisch gesteuerte Relativbewegung zwischen dem Werkstück und der Werkzeugelektrode gesorgt. Als Dielektrikum zwischen den beiden Elektroden dient ein Spülmittel, üblicherweise Wasser, entionisiertes Wasser oder Mineralöl, das die Funkenerodierzone unter einem bestimmten einstellbaren Spüldruck umströmt.

Beim herkömmlichen Senkerodieren wird die Werkzeugelektrode, deren Querschnitt etwa der Form des herzustellenden Hohlraumes entspricht, in einer vorgegebenen Richtung mittels einer Werkzeugspindel in das aufgespannte Werkstück vorgeschoben, bis eine vorgegebene Senktiefe erreicht ist. Bei Verwendung von Werkzeugelektroden mit einem einfachen, z.B. zylindrischen, Querschnitt kann nach Erreichen der Senktiefe der geradlinige Axialvorschub abgeschaltet und die Werkzeugelektrode in einer vorgegebenen Umlaufbahn relativ zum Werkstück bewegt werden, um den Hohlraum aufzuweiten und/oder die Oberflächen der Hohlraumwandung fein zu bearbeiten. Ein alternatives, hier selbstverständlich mit umfasstes Senkerodierverfahren ist die sogenannte "Bahnerosion", welche nach dem gleichen Prinzip wie vorbeschrieben arbeitet, wobei allerdings eine geometrische Bahn mittels einer Stiftelektrode aberodiert wird"

Die vorgenannte Bearbeitung eines Werkstückes mittels der Methode der Funkenerosion erfordert eine äusserst präzise Positionierung des Werkzeuges in Bezug auf das zu bearbeitende Werkstück, bevorzugt mittels eines Wechselhalters, in Bezug auf das zu bearbeitende Werkstück, und zwar im µm-Bereich. Die vorerwähnte Positionierung des Werkzeuges relativ zum Werkstück wird im Stand der Technik rein manuell durchgeführt, wobei im Stand der Technik eine hier nur schematisch angedeutete Positioniereinrichtung (bzw. Einmesseinrichtung) 115 an entsprechenden Voreinstellplätzen eingesetzt wird. Die Positionierung kann grds. auch im Rahmen einer üblichen Qualitätssicherung erfolgen, wobei dann die genannten Positionierdaten in Abhängigkeit von der jeweils erlangten Produktqualität nachverbessert werden.

Es ist ferner anzumerken, dass bei Werkzeugbearbeitungsmaschinen der hier betroffenen Art das Erfordernis einer Umrüstung von einem Werkzeug auf ein anderes Werkzeug, insbesondere bei den vorliegend umfassten Funkenerosionsmaschinen, regelmäßig eintritt.

Das in der Positioniereinrichtung 115 bspw. in einem Wechselhalter befestigte Werkzeug wird, wie durch die gestrichelte Linie 150 angedeutet, wieder durch die Bedienperson oder den bereits erwähnten Manipulator der eigentlichen Funkenerodiervorrichtung 145 zugeführt. Sowohl die Positioniereinrichtung 115 als auch die Funkenerodiervorrichtung 145 werden über Daten- bzw. Steuerleitungen 135, 155 mittels eines zweiten Digitalrechners 130 betrieben. Der zweite Rechner 130 ist mit dem ersten Rechner 110 über eine Datenleitung 160 verbunden, mittels der die ersten Positionsdaten an den zweiten Rechner 130 übertragen werden.

Es versteht sich, dass der erste Rechner 110 und der zweite Rechner 130 auch in einem einzigen Rechner vereint sein können. Auch können die beiden Rechner 110, 130 über ein Netzwerk kommunikationstechnisch verbunden sein.

Es ist weiter anzumerken, dass sich die Positioniereinrichtung 115 vorliegend innerhalb der Bearbeitungsmaschine angeordnet ist. Es versteht sich allerdings, dass die Positioniereinrichtung 115 auch außerhalb der Bearbeitungsmaschine, bspw. in Form einer Messmaschine, angeordnet sein kann.

Die Positioniereinrichtung 115 weist in dem vorliegenden Ausführungsbeispiel insbesondere ein digital arbeitendes berührungsloses Abtast- bzw. Aufnahmesystem 140 auf, dessen Messachse mit der durch die vorgenannte Blickrichtung auf das Werkzeug bzw. das Werkstück gebildeten Achse möglichst in Übereinstimmung gebracht wird.

Es ist anzumerken, dass das berührungslos arbeitende Aufnahmesystem 140 bevorzugt durch ein nachfolgend beschriebenes optisches Kamerasystem gebildet ist. Alternativ kann das Aufnahmesystem 140 allerdings auch durch ein akustisches Messsystems wie bspw. einen Sonograph realisiert sein. Ferner ist anzumerken, dass das Aufnahmesystem entweder, wie vorliegend, in der Werkzeugmaschine (hier Funkenerosionsmaschine) 125 oder in der Positioniereinrichtung 115 angeordnet sein. Das Aufnahmesystem 140 kann selbstverständlich auch an der Fräsmaschine 100 angeordnet werden.

Auch das Kamerasystem 140 ist mittels der Leitung 155 mit dem zweiten Rechner 130 verbunden. Mittels des rechnergesteuerten Kamerasystems wird die Position des durch die Bedienperson zunächst nur grob justiert in dem Wechselhalter befestigten Werkzeuges abgetastet bzw. aufgenommen und die dabei erfassten digitalen Positionsdaten als zweite Positionsdaten im Rechner 130 zwischengespeichert. Wie anhand der Fig. 2 noch in größerem Detail beschrieben, werden im zweiten Rechner 130 die vom ersten Rechner 110 bereitgestellten ersten Positionsdaten mit den vorgenannten zweiten Positionsdaten numerisch verglichen und Korrekturdaten, bspw. in Polarkoordinaten das Tupel (Delta_r, Delta_Phi), und zwar in der vorgegebenen Blickrichtung, ermittelt. Mittels dieser Korrekturdaten wird entweder die Position des Werkzeuges im Wechselhalter der Positioniereinrichtung 115 oder die zum Betrieb der Funkenerodiervorrichtung 145 erforderlichen Steuerdaten im zweiten Rechner 130 entsprechend korrigiert.

Die Fig. 2 zeigt ein Flussdiagramm einer bevorzugten Ausgestaltung des erfindungsgemäßen Verfahrens zur Umrüstung einer Funkenerosionsmaschine mit einem in einer Fräsmaschine vorab hergestellten Werkzeug. Als Ausgangspunkt wird in Schritt 200 das Werkzeug zunächst mittels eines an sich bekannten, auf dem Rechner 110 installierten CAD-Systems konstruiert. Das so konstruierte Werkzeug liegt dann in digitalisierter Form in dem Rechner 110 vor. Aus diesen Daten wird in Schritt 205 in einer vorgebbaren (virtuellen) Blickrichtung auf das Werkzeug die Werkzeugkontur in dieser Richtung in an sich bekannter Weise durch ene Projektionsberechnung ermittelt und die sich ergebenden Daten (bspw. Vektordaten) im Rechner 110 zwischengespeichert. Bevorzugt wird dabei die Werkzeugkontur mit der für das jeweilige Werkstück sich ergebenden Kontur in eine geometrische Beziehung gesetzt, d.h. die für die optimale Bearbeitung des Werkstückes erforderliche Orientierung von Werkzeug und Werkstück werden dabei berücksichtigt.

Basierend auf den vorliegenden CAD-Daten wird in Schritt 210 das Werkzeug an der CNC-gesteuerten Fräsmaschine hergestellt. Das so hergestellte Werkzeug wird gemäß Schritt 212, im vorliegenden Beispiel durch eine Bedienperson, in einer Positioniereinrichtung der Funkenerosionsmaschine (FEM) möglichst präzise vormontiert. In Schritt 214 wird in der genannten Blickrichtung das vormontierte Werkzeug, ggf. zzgl. des Werkstückes, berührungslos erfasst, und zwar in dem vorliegenden Ausführungsbeispiel mittels eines an sich bekannten berührungslosen Messsystems. Aus dem erfassten und digitalisierten Foto wird mittels im Stand der Technik bekannter digitaler Bildbearbeitungswerkzeuge die Werkzeugkontur, ggf. die räumliche Beziehung der Werkzeugkontur und der Werkstückkontur zueinander, berechnet 216. In Schritt 218 wird die so ermittelte Werkzeugkontur mit den in Schritt 205 zwischengespeicherten Daten verglichen und im vorliegenden Beispiel anschließend die Abweichung in (Delta_r, Delta_Phi) berechnet 220.

Es versteht sich, dass die vorbeschriebene Funkenerosionsmaschine und Fräsmaschine nur beispielhaft sind und die Erfindung grundsätzlich bei anderen Fertigungsverfahren Anwendung finden kann, bei denen Werkzeuge und/oder Werkstücke präzise zueinander positioniert werden müssen.

Im vorliegenden Ausführungsbeispiel wird davon ausgegangen, dass die möglichen Freiheitsgrade bei der Montage des Werkzeuges im Werkzeughalter eine bevorzugte Zylindersymmetrie aufweisen, bspw. bedingt durch ein Kugelgelenk des Werkzeughalters. In Abhängigkeit vom jeweiligen Werkzeughalter kann selbstverständlich ein anderes Koordinatensystem wie bspw. kartesische Koordinaten bei der Ermittlung der genannte Abweichung zugrunde gelegt werden.

In Schritt 222 wird nun geprüft, ob die ermittelte Abweichung unterhalb eines empirisch vorgebbaren Schwellenwertes liegt. Ist dies der Fall, kann angenommen werden, dass das Werkzeug mit der gewünschten Präzision im Werkzeughalter montiert worden ist, einem Bearbeitungsverschleiß unterlag und somit einer automatischen Korrektur unterliegt, und zudem das richtige Werkstück und Werkzeug vorhanden sind. Somit kann zu Schritt 224 übergegangen werden, in dem das Werkstück mittels der Funkenerodiervorrichtung 145 gemäß den im Rechner 130 vorliegenden CAD-Daten für das Werkstück mit nunmehr hoher Präzision bearbeitet wird. In Schritt 223 wird weiterhin festgestellt, ob die vorliegenden CAD-Daten mit den Konturen des Werkzeuges übereinstimmen.

Ist die Abweichung jedoch größer als der genannte Schwellenwert, wird zu Schritt 212 zurückgesprungen und die Werkzeugposition entsprechend der Abweichung korrigiert. Bevorzugt erfolgt diese Korrektur anhand von Versatzdaten bei der räumlichen Ansteuerung der Funkenerodierelektrode. Alternativ kann auch eine Nachjustierung der Werkzeugposition durch die Bedienperson, oder mittels eines Manipulators automatisiert, durchgeführt werden.

Es ist anzumerken, dass im vorliegenden Ausführungsbeispiel die Optimierung der Werkzeugposition iterativ erfolgt, wobei die beschriebenen Schritte 212 - 222 so oft wiederholt werden, bis die genannte Schwelle unterschritten ist. Alternativ kann allerdings auch vorgesehen sein, dass der Prüfschritt 222 nur einmal durchlaufen wird und nach einmal erfolgter Positionskorrektur gleich zur Bearbeitung 224 des Werkstückes übergegangen wird, wodurch ggf. Produktionszeit und damit auch Produktionskosten eingespart werden können.

Gemäß einem weiteren Ausführungsbeispiel weist die Abtasteinrichtung eine spezielle Sensorik zur Erfassung der Farbe des Werkstück- und/oder Werkzeugmaterials auf. Die erfasste Materialfarbe dient dazu, die Steuerdaten zur Ansteuerung des Werkzeuges in der Bearbeitungsmaschine entsprechend anzupassen. Dabei wird der zwischen dem Werkzeug und dem Werkstück eingestellte Erodierspalt und die Vorschubgeschwindigkeit des Werkzeuges an die jeweils vorliegende Materialkombination angepasst. Aufgrund der hiermit vorliegenden Informationen über das Werkstück und/oder Werkzeug kann dann hinsichtlich der genannten Einstellungen in der Bearbeitungsmaschine auf vorhandene Daten- oder Technologietabellen zurückgegriffen werden. Im Falle einer Fräsmaschine werden die Vorschubgeschwindigkeit des Werkzeuges und/oder die Rotationsgeschwindigkeit des Werkstückes relativ zum Werkzeug an die jeweiligen Materialien angepasst.

Gemäß einem weiteren Ausführungsbeispiel ist die Sensorik der Abtasteinrichtung so ausgelegt, dass bspw. mittels der erfassten Materialfarbe die Materialien des Werkzeuges und/oder des Werkstücks erkannt werden. So kann bspw. erkannt werden, dass das Werkzeug (bspw. eine Funkenerodierelektrode) aus Kupfer und das Werkstück aus Stahl bestehen. Anhand des Ergebnisses dieses Erkennungsschrittes wird ermöglicht, automatisch die für das jeweilige Werkzeug/Werkstück-Paar geeigneten Bearbeitungsparameter bereitzustellen.

In einem weiteren Ausführungsbeispiel werden die ermittelten Materialeigenschaften, zusammen mit den zugrundeliegenden Steuerdaten für die Werkzeugbearbeitung, dazu verwendet, um die Machbarkeit der Bearbeitung zu prüfen. Im Falle der Funkenerosion, bei der es sich - im Gegensatz zu anderen Werkzeugbearbeitungsverfahren - um ein von der jeweiligen Materialpaarung stark abhängiges elektrisches Abtragsverfahren handelt, können die erforderlichen Materialparameter, wie bspw. die elektrische Leitfähigkeit, aufgrund der wie vorbeschrieben gewonnenen Materialparameter automatisch ausgewählt bzw. eingeschränkt und auf dieser Grundlage die genannte Machbarkeitsprüfung durchgeführt werden.

In einem weiteren Ausführungsbeispiel erfolgt mittels der Abtasteinrichtung eine Identifikation oder gegenseitige Zuordnung des jeweiligen Werkstücks und/oder Werkzeuges. Zu diesem Zweck werden das Werkzeug und/oder das Werkstück mit einer abtastfähigen Kennung, bspw. mit einem Strichcode, einer Klarschriftgravur, einem Hologramm oder dgl., versehen. Im Falle der Werkzeuges kann diese Kennung bereits mittels der Fräsmaschine aufgebracht werden. Es ist hierbei anzumerken, dass solche Kennungen im Stand der Technik an sich bekannt sind, allerdings dort technisch relativ aufwändig mittels an dem jeweiligen Werkzeug- oder Werkstückträger (-halter) angeordneten Mikrochips realisiert sind.

## Patentansprüche

1. Verfahren zur positionsgenauen Umrüstung von Werkzeugen und/oder Werkstücken in einer Werkzeugbearbeitungsmaschine (125) zur Bearbeitung von Werkstücken, insbesondere in einer Funkenerosionsmaschine, wobei in der Werkzeugbearbeitungsmaschine (125), nach bereits erfolgter Befestigung des Werkzeuges und/oder des Werkstückes, mittels einer Abtasteinrichtung (140) mit in der Werkzeugbearbeitungsmaschine (125) tatsächlich bestehenden Positionen des Werkzeuges und/oder des Werkstückes korrelierende zweite Positionsdaten erfasst werden (214, 216) und wobei diese zweiten Positionsdaten mit vorgebbaren ersten Positionsdaten verglichen werden (218) und in Abhängigkeit von dem Ergebnis des Vergleichs Korrekturdaten zur Positionskorrektur des Werkzeuges und/oder des Werkstückes in der Werkzeugbearbeitungsmaschine ermittelt werden (220), **dadurch gekennzeichnet, dass** mittels der Abtasteinrichtung (140) Materialeigenschaften, bevorzugt die Materialart, des Werkzeuges und/oder des Werkstückes erfasst werden und, in Abhängigkeit von den erfassten Materialeigenschaften, die Steuerdaten für die Werkzeugbearbeitungsmaschine entsprechend verändert werden.

2. Verfahren nach Anspruch 1, **dadurch gekennzeichnet, dass** die Materialeigenschaften durch die Reflektivität, die Farbe und/oder die Graustufe des Werkzeug- und/oder Werkstückmaterials gebildet werden.

3. Verfahren nach Anspruch 1 oder 2, **dadurch gekennzeichnet, dass** im Falle einer Funkenerosionsmaschine als Werkzeugbearbeitungsmaschine der zwischen dem Werkzeug und dem Werkstück eingestellte Erodierspalt und/oder die Vorschubgeschwindigkeit des Werkzeuges relativ zum Werkstück in Abhängigkeit von den erfassten Materialeigenschaften verändert wird/werden.

4. Verfahren nach Anspruch 1 oder 2, **dadurch gekennzeichnet, dass** im Falle einer Fräsmaschine als Werkzeugbearbeitungsmaschine die Vorschubgeschwindigkeit des Werkzeuges und/oder die. Rotationsgeschwindigkeit des Werkstückes relativ zum Werkzeug in Abhängigkeit von den erfassten Materialeigenschaften verändert werden.

5. Verfahren nach einem der Ansprüche 1 bis 4, **dadurch gekennzeichnet, dass** die Werkzeugauswahl in Abhängigkeit von den erfassten Materialeigenschaften durchgeführt wird.

6. Verfahren nach einem der vorhergehenden Ansprüche, **dadurch gekennzeichnet, dass** mittels der Abtasteinrichtung (140) Materialeigenschaften, bevorzugt die Materialart, des Werkzeuges und/oder des Werkstückes erfasst werden und, in Abhängigkeit von den erfassten Materialeigenschaften und den Steuerdaten insbesondere betreffend die Oberfläche und Geometrie, die Machbarkeit der Bearbeitung geprüft wird.

7. Verfahren nach Anspruch 1, wobei das Werkzeug zunächst in einer Werkzeugmaschine (100), insbesondere in einer Fräsmaschine, rechnergestützt hergestellt wird, **dadurch gekennzeichnet, dass** die ersten Positionsdaten des Werkzeuges und/oder des Werkstückes bei der rechnergestützten Herstellung (110, 210) des Werkzeuges in der Werkzeugmaschine (100) bereitgestellt werden (205).

8. Verfahren nach einem der vorstehenden Ansprüche, **dadurch gekennzeichnet, dass** die Position des Werkzeuges in Relation zur Position des jeweiligen Werkstückes zugrunde gelegt wird.

9. Verfahren nach einem der vorstehenden Ansprüche , **dadurch gekennzeichnet, dass** die Korrekturdaten in Einheiten kartesischer Koordinaten, Zylinderkoordinaten oder dgl. angegeben werden.

10. Verfahren nach einem der vorhergehenden Ansprüche, **dadurch gekennzeichnet, dass** anhand der Korrekturdaten eine geeignete Korrektur von Steuerdaten für die Werkzeugbearbeitungsmaschine durchgeführt wird oder die tatsächliche Position des Werkzeuges und/oder des Werkstückes entsprechend korrigiert wird.

11. Verfahren nach einem der vorhergehenden Ansprüche, **dadurch gekennzeichnet, dass** die ersten und/oder zweiten Positionsdaten durch die Umrisse oder die äußere Kontur des Werkzeuges in Bezug auf das zu bearbeitende Werkstück in einer vorgebbaren Blickrichtung auf das Werkzeug gebildet werden.

12. Vorrichtung zur positionsgenauen Umrüstung von Werkzeugen und/oder Werkstücken in einer Werkzeugbearbeitungsmaschine (125) zur Bearbeitung von Werkstücken, insbesondere in einer Funkenerosionsmaschine, umfassend in der Werkzeugbearbeitungsmaschine (125) angeordnete Abtastmittel (140) zur Bereitstellung von mit in der Werkzeugbearbeitungsmaschine (125) tatsächlich bestehenden Positionen des Werkzeuges und/oder des Werkstückes korrelierenden zweiten Positionsdaten und **durch** erste Rechenmittel (130) zum Vergleichen dieser zweiten Positionsdaten mit vorgebbaren ersten Positionsdaten sowie zur Bereitstellung von Korrekturdaten zur Positionskorrektur des Werkzeuges und/oder des Werkstückes in der Werkzeugbearbeitungsmaschine (125), in Abhängigkeit von dem Ergebnis dieses Vergleichs, **dadurch gekennzeichnet, dass** die Abtasteinrichtung (140) Mittel zur Erfassung von Materialeigenschaften, bevorzugt der Materialart, des Werkzeuges und/oder des Werkstückes aufweist.

13. Vorrichtung nach Anspruch 12, **dadurch gekennzeichnet, dass** die Materialeigenschaften des Werkzeuges und/oder des Werkstückes durch die Reflektivität, Farbe und/oder Graustufe gebildet sind.

14. Vorrichtung nach Anspruch 12, wobei das Werkzeug zunächst in einer Werkzeugmaschine (100), insbesondere in einer Fräsmaschine, rechnergestützt hergestellt wird, **dadurch gekennzeichnet, dass** die ersten Positionsdaten des Werkzeuges und/oder des Werkstückes durch zweite Rechenmittel (110) zur Herstellung des Werkzeuges in der Werkzeugmaschine (100) bereitgestellt werden.

15. Vorrichtung nach einem der Ansprüche 12 bis 14, **dadurch gekennzeichnet, dass** bei den ersten und den zweiten Rechenmitteln sowie den Abtastmitteln die Position des Werkzeuges in Relation zur Position des jeweiligen Werkstückes zugrunde gelegt ist.

16. Vorrichtung nach einem der Ansprüche 12 bis 15, **dadurch gekennzeichnet, dass** die Abtastmittel durch eine berührungslos arbeitende Abtasteinrichtung, bevorzugt ein digital arbeitendes und auslesbares berührungsloses akustisches oder optisches Aufnahmesystem oder optisches Kamerasystem oder ein Laserabtastsystem gebildet sind.

17. Vorrichtung nach einem der Ansprüche 12 bis 15, **dadurch gekennzeichnet, dass** die Abtastmittel durch eine kontaktbestimmte Abtasteinrichtung, bevorzugt eine Anordnung von einer oder mehreren mechanischen Messspitzen, gebildet ist.

18. Vorrichtung nach einem der Ansprüche 12 bis 17, **gekennzeichnet durch** dritte Rechenmittel zur Berechnung von geänderten Steuerdaten für die Werkzeugbearbeitungsmaschine in Abhängigkeit von den ermittelten Korrekturdaten.

19. Vorrichtung nach einem der Ansprüche 12 bis 17, **gekennzeichnet durch** Einstellmittel zur Veränderung der Position(en) des Werkzeuges und/oder des Werkstückes in der Werkzeugbearbeitungsmaschine in Abhängigkeit von den ermittelten Korrekturdaten.

20. Vorrichtung nach einem der vorstehenden Ansprüche , **gekennzeichnet durch** vierte Rechenmittel zur Anpassung der Steuerdaten für die Werkzeugbearbeitungsmaschine an die erfassten Materialeigenschaften des Werkzeuges und/oder des Werkstückes.

## Claims

1. Method for the resetting with precise positioning of tools and/or workpieces in a machine tool (125) for the machining of workpieces, in particular in a spark erosion machine, wherein in the machine tool (125), after the tool and/or the workpiece have already been secured, second position data items (214, 216) correlating to the actual positions of the tool and/or the workpiece in the machine tool (125) are determined by means of a scanning device (140), and wherein these second position data items are compared (218) with first position data items which can be specified and, as a function of the result of the comparison, correction data is determined (220) for correcting the position of the tool and/or of the workpiece in the machine tool, **characterised in that**, by means of the scanning device (140) material properties, preferably the type of material, of the tool, and/or of the workpiece are determined, and, as a function of the material properties determined, the control data for the machine tool is altered accordingly.

2. Method according to Claim 1, **characterised in that** the material properties are formed by the reflectivity, the colour, and/or the grey level of the tool and/or the workpiece.

3. Method according to Claim 1 or 2, **characterised in that**, in the case of a spark erosion machine as a machine tool, the erosion gap adjusted between the tool and the workpiece and/or the feed rate of the tool relative to the workpiece is/are changed as a function of the material properties determined.

4. Method according to Claim 1 or 2, **characterised in that**, in the case of a milling machine as a machine tool, the feed rate of the tool and/or the rotation speed of the workpiece relative to the tool are changed as a function of the material properties determined.

5. Method according to any one of Claims 1 to 4, **characterised in that** the selection of the tool is made as a function of the material properties determined.

6. Method according to any one of the foregoing Claims, **characterised in that**, by means of the scanning device (140), material properties, preferably the type of material, of the tool and/or of the workpiece are determined, and, as a function of the material properties and the control data determined, in particular regarding the surface and the geometry, the feasibility of the machining is tested.

7. Method according to Claim 1, wherein the tool is initially manufactured with the aid of a computer in a machine tool (100), in particular in a milling machine, **characterised in that** the first position data of the tool and/or of the workpiece are provided (205) during the computer-aided manufacture (110, 210) of the tool in the machine tool (100).

8. Method according to any one of the foregoing Claims, **characterised in that** the position of the tool in relation to the position of the individual workpiece is taken as the basis.

9. Method according to any one of the foregoing Claims, **characterised in that** the correction data is indicated in units of Cartesian co-ordinates, cylinder co-ordinates, or the like.

10. Method according to any one of the foregoing Claims, **characterised in that**, on the basis of the correction data, an appropriate correction of control data for the machine tool is carried out, or the actual position of the tool and/or of the workpiece is corrected accordingly.

11. Method according to any one of the foregoing Claims, **characterised in that** the first and/or second position data are formed by the contour outlines or the outer contour of the tool in relation to the workpiece to be machined in a direction of view onto the workpiece which can be specified.

12. Device for the resetting with precise positioning of tools and/or workpieces in a machine tool (125) for the machining of workpieces, in particular in a spark erosion machine, comprising scanning means (140) arranged in the machine tool (125) for the provision of second position data items correlating to the actual positions of the tool and/or of the workpiece, and by first computer means (130) for the comparison of these second position data items with first position data items which can be specified, as well as for the provision of correction data for correcting the position of the tool and/or of the workpiece in the machine tool (125) as a function of the result of this comparison, **characterised** n that the scanning device (140) has means for determining material properties, preferably the type of material, of the tool and/or of the workpiece.

13. Device according to Claim 12, **characterised in that** the material properties of the too and/or of the workpiece are formed by the reflectivity, colour, and/or the grey level.

14. Device according to Claim 12, wherein the tool is initially manufactured with the aid of a computer in a machine tool (100), in particular in a milling machine, **characterised in that** the first position data of the tool and/or of the workpiece are provided by second computer means (110) for the manufacture of the tool in the machine tool (100).

15. Device according to any one of Claims 12 to 14, **characterised in that**, with the first and second computer means and the scanning means, the position of the workpiece in relation to the position of the individual workpiece is taken as the basis.

16. Device according to any one of Claims 12 to 15, **characterised in that** the scanning means are formed by a scanning device operating in a contact-free manner, preferably a digitally-operating and readable contact-free acoustic or optical recording system or optical camera system or a laser scanning system.

17. Device according to any one of Claims 12 to 15, **characterised in that** the scanning means are formed by a contact-determining scanning device, preferably an arrangement of one or more mechanical measuring tips.

18. Device according to any one of Claims 12 to 17, **characterised by** third computer means for the calculation of changed control data for the machine tool as a function of the correction data determined.

19. Device according to any one of Claims 12 to 17, **characterised by** adjustment means for changing the position(s) of the tool and/or of the workpiece in the machine tool as a function of the correction data determined.

20. Device according to any one of the foregoing Claims, **characterised by** fourth computer means for adjusting the control data for the machine tool to the material properties determined of the tool and/or of the workpiece.

## Revendications

1. Procédé de changement d'outils et/ou de pièces dans une position précise dans une machine d'usinage d'outils (125) pour usiner des pièces, en particulier dans une machine à électro-érosion, selon lequel on saisit (214, 216) dans la machine d'usinage d'outils (125), après la fixation de l'outil et/ou de la pièce, des deuxièmes données de position au moyen d'une installation de détection (140) en corrélation avec des positions de l'outil et/ou de la pièce réellement existantes dans la machine d'usinage d'outils (125), on compare (218) ces deuxièmes données de position avec des premières données de position prédéterminées, et on détermine (220) des données de correction de l'outil et/ou de la pièce dans la machine d'usinage d'outils en fonction du résultat de la comparaison,
**caractérisé en ce qu'**
on détecte au moyen de l'installation de détection (140), des propriétés de matériau, de préférence le type de matériau, de l'outil et/ou de la pièce et, en fonction des propriétés de matériau détectées, on modifie les données de commande pour la machine d'usinage d'outils en conséquence.

2. Procédé selon la revendication 1,
**caractérisé en ce qu'**
on forme les propriétés de matériau par la réflexivité, la couleur et/ou le niveau de gris du matériau de l'outil ou de la pièce.

3. Procédé selon la revendication 1 ou 2,
**caractérisé en ce que**
dans le cas d'une machine à électro-érosion servant de machine d'usinage d'outils, on modifie l'intervalle d'érosion réglé entre l'outil et la pièce et/ou la vitesse d'avancement de l'outil par rapport à la pièce en fonction des propriétés de matériau détectées.

4. Procédé selon la revendication 1 ou 2,
**caractérisé en ce que**
dans le cas d'une machine de fraisage servant de machine d'usinage d'outils, on modifie la vitesse d'avancement de l'outil et/ou la vitesse de rotation de la pièce par rapport à l'outil en fonction des propriétés de matériau détectées.

5. Procédé selon l'une quelconque des revendications 1 à 4,
**caractérisé en ce que**
le choix de l'outil s'effectue en fonction des propriétés de matériau détectées.

6. Procédé selon l'une quelconque des revendications précédentes,
**caractérisé en ce que**
l'installation de détection (140) détecte des propriétés de matériau, de préférence le type de matériau, de l'outil et/ou de la pièce et, en fonction des propriétés de matériau et des données de commande, en particulier concernant la surface et la géométrie, on vérifie la faisabilité de l'usinage.

7. Procédé selon la revendication 1, selon lequel l'outil est d'abord fabriqué de manière assistée par ordinateur dans une machine-outil (100), en particulier une machine de fraisage,
**caractérisé en ce que**
les premières données de position de l'outil et/ ou de la pièce sont mises à disposition (205) dans la machine-outil (100) lors de la fabrication assistée par ordinateur (110, 210) de l'outil.

8. Procédé selon l'une quelconque des revendications précédentes,
**caractérisé en ce que**
la position de l'outil est fixée par rapport à la position de la pièce respective.

9. Procédé selon l'une quelconque des revendications précédentes,
**caractérisé en ce que**
les données de correction sont indiquées en unités de coordonnées cartésiennes, de coordonnées cylindriques ou similaires.

10. Procédé selon l'une quelconque des revendications précédentes,
**caractérisé en ce qu'**
à l'aide de données de correction, une correction appropriée de données de commande est effectuée pour la machine d'usinage d'outils, ou la position réelle de l'outil et/ou de la pièce est corrigée de manière appropriée.

11. Procédé selon l'une quelconque des revendications précédentes,
**caractérisé en ce que**
les premières et/ ou deuxièmes données de position sont formées par les contours ou le contour extérieur de l'outil par rapport à la pièce à usiner dans une direction de vue prédéterminée sur l'outil.

12. Dispositif de changement d'outils et/ou de pièces dans une position précise dans une machine d'usinage d'outils (125) pour usiner des pièces, en particulier dans une machine à électro-érosion, comprenant des moyens de détection (140) disposés dans la machine d'usinage d'outils (125) pour fournir des deuxièmes données de positions en corrélation avec des positions réelles de l'outil et/ou de la pièce dans la machine d'usinage d'outils (125), et des premiers moyens de calcul (130) pour comparer ces deuxièmes données de position avec des premières données de position prédéterminées ainsi que pour fournir des données de correction pour corriger la position de l'outil et/ou de la pièce dans la machine d'usinage d'outils (125) en fonction du résultat de cette comparaison,
**caractérisé en ce que**
l'installation de détection (140) présente des moyens pour détecter des propriétés de matériau, de préférence le type de matériau, de l'outil et/ou de la pièce.

13. Dispositif selon la revendication 12,
**caractérisé en ce que**
les propriétés de matériau de l'outil et/ou de la pièce sont formées par la réflexivité, la couleur et/ou le niveau de gris du matériau de l'outil ou de la pièce.

14. Dispositif selon la revendication 12, l'outil étant d'abord fabriqué dans une machine-outil (100), en particulier dans une fraiseuse, de façon assistée par ordinateur,
**caractérisé en ce que**
les premières données de position de l'outil et/ou de la pièce sont fournies par des deuxièmes moyens de calcul (110) pour fabriquer l'outil dans la machine-outil (100).

15. Dispositif selon l'une quelconque des revendications 12 à 14,
**caractérisé en ce que**
pour les premiers et deuxièmes moyens de calcul ainsi que pour les moyens de détection on se base sur la position de l'outil par rapport à la position de la pièce respective.

16. Dispositif selon l'une quelconque des revendications 12 à 15,
**caractérisé en ce que**
les moyens de détection sont formés par une installation de détection fonctionnant sans contact, de préférence par un système d'enregistrement acoustique ou optique sans contact numérique dont on peut extraire les données, ou par un système de caméra optique ou par un système de balayage laser.

17. Dispositif selon l'une quelconque des revendications 12 à 15,
**caractérisé en ce que**
les moyens de détection sont formés par une installation de détection travaillant par contact, de préférence par un dispositif d'une ou de plusieurs pointes de mesure mécaniques.

18. Dispositif selon l'une quelconque des revendications 12 à 17,
**caractérisé par**
des troisièmes moyens de calcul pour calculer des données de commande modifiées pour la machine d'usinage d'outils en fonction des données de correction détectées.

19. Dispositif selon l'une quelconque des revendications 12 à 17,
**caractérisé par**
des moyens de réglage pour modifier la (les) position(s) de l'outil et/ou de la pièce dans la machine d'usinage d'outils en fonction des données de correction détectées.

20. Dispositif selon l'une quelconque des revendications précédentes,
**caractérisé par**
des quatrièmes moyens de calcul pour adapter les données de commande pour la machine d'usinage d'outils aux propriétés de matériau de l'outil et/ou de la pièce détectées.
